# DEMANDE DE BREVET EUROPEEN

(11) **EP 1 498 565 A2**
(43) Date de publication de la demande: **19.01.2005**
(21) Numéro de dépôt: 04291788.0
(22) Date de dépôt: 13.07.2004
(51) Int. Cl.: E05F 11/48

(54) **Tendeur de cable de lève-vitre**

(30) Priorité: 18.07.2003 FR 0308803
(71) Demandeur: ArvinMeritor Light Vehicle Systems-France, 45600 Sully sur Loire (FR)
(72) Inventeur: Cardine, Patrice, 45100 Orléans (FR); Chevy, Denis, 45510 Neuvy En Sullias (FR); Gavaret, Christophe, 45460 Bray En Val (FR)
(74) Mandataire: Cabinet Hirsch

(57) **Abrégé**

Un tendeur de câble de lève-vitre comprend un ensemble vis-écrou (11-12) comprenant un angle de pas de vis irréversible, un premier ressort (15) adapté à absorber une sous tension réversible du câble et un second ressort (16) adapté à actionner l'ensemble vis-écrou. La raideur du premier ressort est supérieure à la raideur du second ressort. Le tendeur selon l'invention permet d'absorber différemment des sous tensions réversibles et irréversibles du câble.

## Description

La présente invention concerne un tendeur de câble de lève-vitre.

Un lève-vitre est un dispositif utilisé dans un véhicule automobile muni d'une vitre pour transmettre à la vitre une force d'entraînement. Un lève-vitre comprend un organe d'entraînement, tel qu'un câble ou une courroie, relié à un dispositif d'entraînement, tel qu'une manivelle ou un moteur, qui transmet un effort d'entraînement au lève-vitre. La vitre peut être entraînée par des curseurs qui se déplacent le long de rails sous l'action du câble. Le câble peut être décomposé entre un câble inférieur et un câble supérieur enroulés en sens inverse sur un tambour entraîné par un moteur.

La tension du câble dans un lève-vitre doit être bien maîtrisée. Une sous tension du câble entraîne une imprécision du fonctionnement du lève-vitre ainsi qu'une imprécision de la position des curseurs par rapport à la position du tambour et une surtension du câble entraîne une usure prématurée des éléments du lève-vitre.

La précision du fonctionnement du lève-vitre est importante, et particulièrement critique dans le cas de lève-vitres de portes sans cadre. Dans certains modèles de lève-vitres de portes sans cadre, la vitre s'abaisse légèrement lors de l'ouverture de la porte afin de se dégager du joint du toit. Le déplacement de la vitre doit donc être précisément effectué afin de ne pas entraver l'ouverture de la porte. Ce déplacement ne doit pas non plus être trop important afin de respecter les contraintes de la réglementation, en particulier sur l'anti-pincement. Le câble d'entraînement de la vitre doit donc avoir une tension suffisante pour garantir un déplacement précis de la vitre.

Or, les éléments constituant le dispositif de lève-vitre subissent un vieillissement progressif qui conduit à l'élongation apparente du câble dû par exemple à l'usure du tambour d'entraînement et des poulies, au tassement des gaines du câble ou au fluage des poulies. Cette élongation du câble dû au vieillissement des différentes pièces du lève-vitre doit être rattrapé.

Par ailleurs, lorsque la vitre est actionnée en remontée, elle parvient en butée haute alors que le moteur d'entraînement applique toujours un couple sur le dispositif de lève-vitre. Ce surcouple en butée haute peut induire une déformation élastique des éléments du dispositif de lève-vitre et générer une élongation élastique du câble et des autres organes en contrainte.

On connaît des mécanismes de rattrapage de jeu permettant d'absorber l'élongation du câble afin de garantir une tension suffisante au bon fonctionnement du dispositif de lève-vitre. Un tel mécanisme est décrit dans la demande de brevet EP 0 244 303 et consiste dans une vis-écrou de tensionneur contrainte par un poussoir et un organe élastique. Dans un sens, la vis peut, sous la poussée axiale de l'organe élastique, effectuer un mouvement hélicoïdal dans un écrou chaque fois que disparaît ou se réduit la force exercée par le poussoir, et dans l'autre sens, la vis ne peut pas effectuer de translation ou de rotation dans l'écrou. Ce mécanisme est un système irréversible basé sur le frottement. Ainsi, lorsqu'un jeu est susceptible de se produire entre deux pièces associées à cette vis de tensionneur, il est automatiquement compensé au fur et à mesure de son apparition par le déplacement unidirectionnel de la vis.

Un tel mécanisme compense cependant indifféremment les élongations du câble qui sont dues à un vieillissement du dispositif ou à une déformation élastique sous l'effet du couple moteur lorsque le mécanisme de lève-vitre est en butée haute. Cette déformation élastique, qui apparaît dès la première manoeuvre du lève-vitre en butée haute, peut atteindre 5 à 8 mm et reste sensiblement constante lors des manoeuvres suivantes. Cependant, cette déformation disparaît lorsque le couple moteur est relâché.

Or, lorsque l'on utilise un mécanisme tel que décrit dans le document EP 0 244 303, cette déformation élastique est également compensée, ce qui génère une surtension du câble et à une dégradation prématuré de celui-ci. En effet, en cas de surtension du câble, l'usure prématurée des composants du mécanisme conduit à une dégradation du mécanisme de lève-vitre au bout de quelques milliers de cycles, alors que l'objectif de durée de vie du mécanisme est de plusieurs dizaines de milliers de cycles.

Il existe donc un besoin pour un mécanisme de tension de câble dans un dispositif de lève-vitre qui permette de rattraper une élongation d'usure de façon irréversible et de rattraper une déformation élastique de façon réversible.

A cet effet, l'invention propose, un tendeur de câble de lève-vitre comprenant :
- un ensemble vis-écrou comprenant un angle de pas de vis irréversible ;
- un premier ressort adapté à absorber une sous tension réversible du câble ;
- un second ressort adapté à actionner l'ensemble vis-écrou, la raideur du premier ressort étant supérieure à la raideur du second ressort.

Selon une caractéristique, le second ressort est adapté à actionner la vis dans l'écrou lorsque le premier ressort est en expansion maximal.

Selon une caractéristique, la raideur du premier ressort est telle que la force de rappel dudit premier ressort est comprise entre 60N et 80N.

Selon une caractéristique, la raideur du second ressort est telle que la force de rappel dudit second ressort est comprise entre 25N et 40N.

Selon une caractéristique, la course du premier ressort est comprise entre 2 et 8 mm.

Selon un mode de réalisation, le premier ressort est disposé en série avec l'ensemble vis-écrou.

Selon un mode de réalisation, le premier ressort est contraint contre la vis par une gaine axée sur le câble.

Selon un mode de réalisation, le second ressort est disposé en parallèle avec l'ensemble vis-écrou.

Selon un mode de réalisation, le second ressort est en butée fixe sur l'écrou et en butée mobile sur la vis.

L'invention concerne aussi un lève-vitre comprenant un câble tendu pour actionner le mouvement d'une vitre et un tendeur de câble selon l'invention, le premier ressort étant adapté à absorber une sous tension réversible du câble lorsque la vitre est en butée haute et le second ressort étant adapté à actionner l'ensemble vis-écrou lors d'une sous tension irréversible d'usure.

L'invention concerne également une porte sans cadre comprenant un lève-vitre selon l'invention.

D'autres caractéristiques et avantages de l'invention apparaîtront à la lecture de la description détaillée qui suit des modes de réalisation de l'invention, donnés à titre d'exemple uniquement et en références aux dessins annexés qui montrent :
- figure 1, un tendeur de câble selon l'invention lorsque le câble est tendu ;
- figure 2, un tendeur de câble selon l'invention lorsque le câble est détendu.

Le tendeur de câble selon l'invention est disposé sur le chemin de câble d'un dispositif de lève-vitre. Il est placé de préférence sur le câble inférieur du mécanisme qui est le « brin mou » du mécanisme lorsque celui-ci est en butée haute.

Lorsque le câble se détend, soit du fait d'une usure mécanique de vieillissement, soit du fait d'une déformation élastique sous l'effet d'un sur couple d'entraînement lorsque le dispositif est en butée haute, le tendeur de câble doit absorber cette élongation en rallongeant le chemin de câble.

Le tendeur selon l'invention présente ainsi deux mécanismes distincts et complémentaires de rattrapage de l'élongation du chemin de câble. Le tendeur comprend un premier ressort adapté à absorber une sous-tension réversible du câble, en particulier du câble inférieur, cette sous tension étant liée à une déformation élastique du câble supérieur. Le tendeur comprend également un ensemble vis-écrou comprenant un angle de pas de vis irréversible et un second ressort adapté à actionner l'ensemble vis-écrou lorsque l'élongation est irréversible. A cet effet, la raideur du premier ressort est supérieure à la raideur du second ressort. Le second ressort, destiné à actionner le mécanisme de rattrapage de sous-tension irréversible du câble, n'est sollicité qu'après le premier ressort destiné à actionner le mécanisme de rattrapage de sous-tension réversible du câble.

Ainsi, le câble ne sera pas surtendu du fait d'un rattrapage d'élongation du câble inapproprié, en particulier dans le cas d'une élongation réversible lorsque le dispositif est en butée haute.

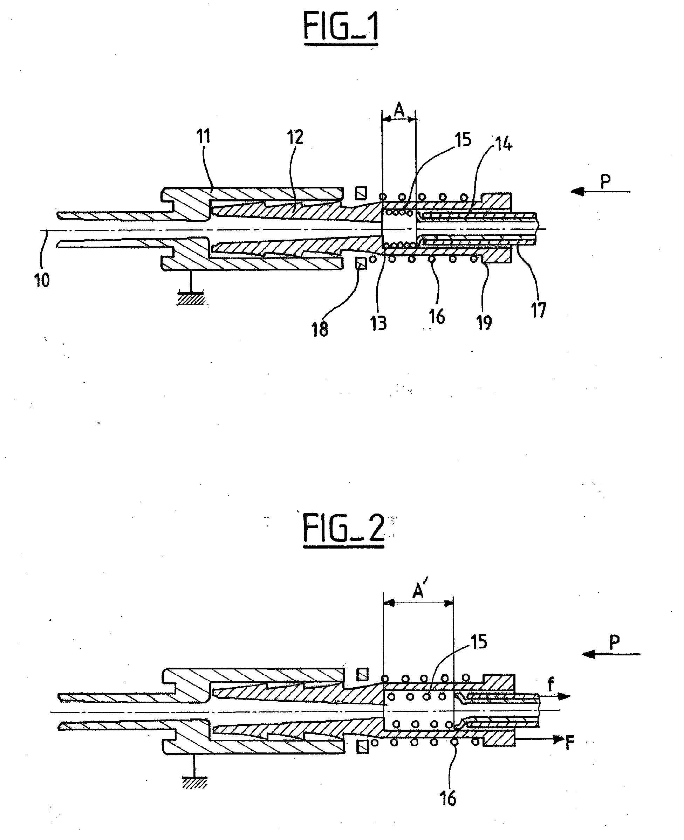

L'invention va être décrite en détail en référence aux figures 1 et 2.

Le tendeur de câble est centré sur un axe 10 de chemin de câble d'un dispositif de lève-vitre. Le tendeur comprend un ensemble vis-écrou, une partie écrou 11 étant fixe et une partie vis 12 étant mobile dans l'écrou 11. L'ensemble vis-écrou 11-12 comprend un angle de pas de vis irréversible. Par exemple, la vis 12 et l'écrou 11 présentent un angle d'hélice complémentaire tel que d'une part, la vis 12 puisse effectuer un mouvement hélicoïdal dans l'écrou 11 dans un sens sous une contrainte axiale d'un organe élastique, et d'autre part, tel que la vis 12 ne puisse effectuer aucun mouvement de translation ou de rotation dans l'écrou 11 dans le sens opposé.

Le tendeur selon l'invention comprend par ailleurs un premier ressort 15 et un second ressort 16. Le premier ressort 15 a une raideur largement supérieure à la raideur du second ressort 16, par exemple le premier ressort 15 a une raideur telle que la force de rappel dudit premier ressort est comprise entre 60 N et 80N contre une raideur du second ressort 16 telle que la force de rappel dudit second ressort est comprise entre 25N et 40N.

Selon le mode de réalisation illustré, le premier ressort 15 est disposé en série avec l'ensemble vis-écrou 11-12, c'est-à-dire dans le prolongement de la vis 12. Le premier ressort 15 est par exemple comprimé contre un épaulement interne 13 de la vis 12 et par une gaine 17 du câble. Un fourreau 14 peut être axé sur le chemin de câble 10 et peut être enfiché dans la gaine 17 par exemple pour renforcer l'ensemble.

Lorsque le câble est tendu, le premier ressort 15 est comprimé et présente alors une longueur A. Le premier ressort 15 à l'état comprimé exerce sur la gaine 17 du câble une force f contraire à la tension P exercée par la gaine 17 tendue, la tension de la gaine 17 étant équivalente à la gaine du câble.

Selon le mode de réalisation illustré, le second ressort 16 est disposé en parallèle avec l'ensemble vis-écrou 11-12. Le second ressort 16 peut être en butée fixe de l'écrou 11, par exemple contre une extrémité 18 de l'écrou, et être en butée mobile sur la vis 12, par exemple contre un épaulement externe 19 de la vis. Le second ressort 16 à l'état comprimé exerce sur la vis 12 une force F contraire à la tension P exercée par la gaine 17 tendue.

La comparaison des figures 1 et 2 permet d'illustrer le fonctionnement du tendeur selon l'invention.

Lorsque le câble est tendu, la tension P exercée par le câble sur le tendeur est de l'ordre de 80N à 100N. Cette tension P est donc telle que les premier 15 et second 16 ressorts sont dans un état comprimé, c'est-à-dire que la tension P est largement plus élevée que les forces de rappel respectives f et F des premier 15 et second 16 ressorts.

Lorsque le câble se détend, par exemple sous l'effet d'une déformation élastique due à un surcouple appliqué par le moteur alors que le dispositif de lève-vitre est un butée haute, la tension P diminue. La raideur du premier ressort 15 est choisi telle que la force de rappel f devient alors supérieure à la tension P et le ressort 15 s'étend, éventuellement jusqu'à atteindre sa course A'.

Si la sous tension P du câble est simplement due à la position du lève-vitre en butée haute, une course A' de 2 à 8 mm, par exemple du premier ressort 15 est suffisante pour compenser cette sous tension et rallonger le chemin de câble de manière à replacer le câble dans un état tendu. La course A' du premier ressort 15 est choisie en fonction de la déformation élastique du câble susceptible de se produire lorsque le lève-vitre est en butée haute, donc varie suivant le couple du moteur et la longueur de câble principalement.

L'allongement du premier ressort 15 est fait complètement indépendamment du second ressort 16 et de l'ensemble écrou-vis 11-12. En effet, la raideur du second ressort 16 étant inférieure à la raideur du premier ressort 15, le second ressort 16 reste dans son état alors que le premier ressort 15 se détend sous l'effet de la force f devenue supérieure à la tension P. En revanche, la force de rappel F du second ressort 16 reste inférieure à la tension P. Ainsi, le second ressort 16, maintenu dans son état, n'applique aucune action sur la vis 12. Il en résulte qu'aucune élongation irréversible n'est introduite par l'ensemble vis-écrou lorsque la tension P est réduite du fait d'une déformation élastique réversible.

Lorsque le surcouple du moteur est relâché ou lorsque le lève-vitre reprend l'actionnement du câble, par exemple par une descente de la vitre, la tension P du câble redevient supérieure à la force f du premier ressort 15 qui sera à nouveau placé dans un état comprimé. Le premier ressort 15 a donc bien une fonction d'absorption réversible d'une déformation élastique du câble et permet d'éviter l'introduction d'une surtension définitive sur le câble du dispositif.

En revanche, si la sous tension P de la gaine 17se maintient malgré l'élongation A' du premier ressort 15, par exemple du fait d'une usure de certaines pièces du dispositif de lève-vitre, alors la force F de rappel de second ressort 16 devient supérieure à la tension P. Le second ressort 16 se détend à l'encontre de la tension P de la gaine 17 et actionne la vis 12 dans l'écrou 11.

Lorsque sous l'effet de la force de rappel F du second ressort 16, la vis 12 a été déplacée de manière irréversible pour allonger le chemin de câble et absorber ainsi l'élongation due à l'usure, la tension du câble P redevient supérieure aux forces de rappel f et F des ressorts 15 et 16 qui sont alors à nouveau comprimés. Un nouveau cycle d'absorption de l'élongation du câble peut alors intervenir le cas échéant selon le même principe.

Ainsi, un lève-vitre, en particulier pour une porte sans cadre, comprenant un câble tendu pour actionner le mouvement d'une vitre est proposé. Un tel lève-vitre comprend un tendeur de câble selon l'invention adapté d'une part à absorber une sous tension réversible du câble lorsque la vitre est en butée haute et d'autre part à absorber une sous tension irréversible d'usure sans pour autant introduire de surtension sur le câble.

Bien entendu, la présente invention n'est pas limitée aux modes de réalisation décrits à titre d'exemple; ainsi, la disposition des ressorts 15 et 16 et le sens d'actionnement de la vis 12 dans l'écrou 11 peuvent être adaptés selon les modes de réalisation du tendeur de câble.

## Revendications

1. Tendeur de câble de lève-vitre comprenant :
- un ensemble vis-écrou (11-12) comprenant un angle de pas de vis irréversible ;
- un premier ressort (15) adapté à absorber une sous tension réversible du câble,
- un second ressort (16) adapté à actionner l'ensemble vis-écrou, la raideur du premier ressort étant supérieure à la raideur du second ressort.

2. Tendeur de câble selon la revendication 1, **caractérisé en ce que** le second ressort (16) est adapté à actionner la vis (12) dans l'écrou (11) lorsque le premier ressort (15) est en expansion maximale.

3. Tendeur de câble selon la revendication 1 ou 2, **caractérisé en ce que** la raideur du premier ressort (15) est telle que la force de rappel (f) dudit premier ressort est comprise entre 60N et 80N.

4. Tendeur de câble selon l'une des revendications 1 à 3, **caractérisé en ce que** la raideur du second ressort (16) est telle que la force de rappel (F) dudit second ressort est comprise entre 25N et 40N.

5. Tendeur de câble selon l'une des revendications 1 à 4, **caractérisé en ce que** la course du premier ressort (15) est comprise entre 2 et 8 mm.

6. Tendeur de câble selon l'une des revendications 1 à 5, **caractérisé en ce que** le premier ressort (15) est disposé en série avec l'ensemble vis-écrou (11-12).

7. Tendeur de câble selon la revendication 6, **caractérisé en ce que** le premier ressort (15) est contraint contre la vis (12) par une gaine (17) axée sur le câble.

8. Tendeur de câble selon l'une des revendications 1 à 7, **caractérisé en ce que** le second ressort (16) est disposé en parallèle avec l'ensemble vis-écrou (11-12).

9. Tendeur de câble selon la revendication 8, **caractérisé en ce que** le second ressort (16) est en butée fixe sur l'écrou (11) et en butée mobile sur la vis (12).

10. Lève-vitre comprenant un câble tendu pour actionner le mouvement d'une vitre et un tendeur de câble selon l'une des revendications 1 à 9, le premier ressort (15) étant adapté à absorber une sous tension réversible du câble lorsque la vitre est en butée haute et le second ressort (16) étant adapté à actionner l'ensemble vis-écrou (11-12) lors d'une sous tension irréversible d'usure.

11. Porte sans cadre comprenant un lève-vitre selon la revendication 10.
